(19)

Europäisches
Patentamt

European
Patent Office

Office européen
des brevets

(11) **EP 4 530 910 A1**

(12) **EUROPEAN PATENT APPLICATION**

(43) Date of publication:
**02.04.2025 Bulletin 2025/14**

(21) Application number: **24199570.3**

(22) Date of filing: **10.09.2024**

(51) International Patent Classification (IPC):
**G06F 30/00** (2020.01)    **G06F 30/10** (2020.01)
**G06T 17/10** (2006.01)    **G06T 19/20** (2011.01)

(52) Cooperative Patent Classification (CPC):
**G06F 30/00; G06F 30/10; G06T 17/10; G06T 19/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 US 202318475738**

(71) Applicant: **Autodesk, Inc.**
**San Francisco, CA 94105 (US)**

(72) Inventors:
• **AMAGLIANI, Marco**
**Cambridge, CB4 2ZA (GB)**
• **HENLEY, Iain Edward**
**Essex, CB10 1PT (GB)**

(74) Representative: **Fish & Richardson P.C.**
**Highlight Business Towers**
**Mies-van-der-Rohe-Straße 8**
**80807 München (DE)**

(54) **OFFSETTING BOUNDARY REPRESENTATIONS IN COMPUTER-AIDED DESIGN**

(57)    A computer-implemented method includes receiving an offset amount for a first boundary representation of a first three-dimensional object, forming a second boundary representation of a second three-dimensional object, the second three-dimensional object being an offset version of the first three-dimensional object, and processing the second boundary representation of the second three-dimensional object for output by a physical device. The forming includes using multi-threading to process respective ones of the connected surface elements to produce offset surface elements for the second boundary representation of the second three-dimensional object in accordance with the offset amount, and identifying portions of the connected surface elements that will not have corresponding portions in the offset surface elements by evaluating a distance field representation of the first three-dimensional object using sampling points taken from the connected surface elements, the offset surface elements, or both.

FIG. 1

**Description**

BACKGROUND

This specification relates to computer aided design, such as generation of three dimensional (3D) models for objects and performing operations such as offsetting and shelling on the models. The objects can be manufactured using additive manufacturing, subtractive manufacturing and/or other manufacturing systems and techniques, or can be other objects, which can be provided as a digital asset, such as for use in animation.

Computer Aided Design (CAD) software has been developed and used to generate 3D representations of objects, and Computer Aided Manufacturing (CAM) software has been developed and used to evaluate, plan and control the manufacture of those objects, e.g., using Computer Numerical Control (CNC) manufacturing techniques. Typically, CAD software stores the 3D representations of the geometry of the objects being modeled using a boundary representation (B-Rep) format. A B-Rep model includes a set of connected surface elements defining boundaries between interior and exterior points of the modeled 3D object. In a B-Rep model (often referred to as a B-Rep), geometry is stored in the computer using smooth and precise mathematical surfaces, in contrast to the discrete and approximate surfaces of a mesh model, which can be difficult to work with in a CAD program. CAD software can be used to manipulate B-reps and perform operations such as offsetting and shelling.

CAD programs have been used in conjunction with subtractive manufacturing systems and techniques. Subtractive manufacturing refers to any manufacturing process where 3D objects are created from stock material (generally a "blank" or "workpiece" that is larger than the 3D object) by cutting away portions of the stock material. Such manufacturing processes typically involve the use of multiple CNC machine cutting tools in a series of operations, starting with a roughing operation, an optional semi-finishing operation, and a finishing operation. In addition to CNC machining, other subtractive manufacturing techniques include electrode discharge machining, chemical machining, waterjet machining, etc. In contrast, additive manufacturing, also known as solid free form fabrication or 3D printing, refers to any manufacturing process where 3D objects are built up from raw material (generally powders, liquids, suspensions, or molten solids) in a series of layers or cross-sections. Examples of additive manufacturing include Fused Filament Fabrication (FFF) and Selective Laser Sintering (SLS). Other manufacturing techniques for building 3D objects from raw materials include casting and forging (both hot and cold) and molding.

SUMMARY

This specification describes technologies relating to computer-aided design of objects, such as three-dimensional objects stored as B-reps, using operations such as offsetting and shelling that can be efficiently carried out using a distance field. The systems and techniques described can be used for computer-aided manufacturing of the resulting objects.

In general, one or more aspects of the subject matter described in this specification can be embodied in one or more methods (and also one or more non-transitory computer-readable mediums tangibly encoding a computer program operable to cause one or more processors to perform operations), including: receiving, by a computer aided design program, an offset amount for a first boundary representation of a first three-dimensional object, the first boundary representation including connected surface elements defining a boundary between interior and exterior portions of the first three-dimensional object; forming, by the computer aided design program, a second boundary representation of a second three-dimensional object, the second three-dimensional object being an offset version of the first three-dimensional object; and processing, by the computer aided design program, the second boundary representation of the second three-dimensional object for output by a physical device. The forming includes using multi-threading to process respective ones of the connected surface elements to produce offset surface elements for the second boundary representation of the second three-dimensional object in accordance with the offset amount, and identifying portions of the connected surface elements that will not have corresponding portions in the offset surface elements by evaluating a distance field representation of the first three-dimensional object using sampling points taken from the connected surface elements, the offset surface elements, or both.

One or more aspects of the subject matter described in this specification can also be embodied in one or more systems including one or more processors; and a computer-readable medium storing instructions that, when performed, cause the one or more processors to perform operations including: receiving, by a computer aided design program, an offset amount for a first boundary representation of a first three-dimensional object, the first boundary representation including connected surface elements defining a boundary between interior and exterior portions of the first three-dimensional object; forming, by the computer aided design program, a second boundary representation of a second three-dimensional object, the second three-dimensional object being an offset version of the first three-dimensional object; and processing, by the computer aided design program, the second boundary representation of the second three-dimensional object for output by a physical device. The forming includes using multi-threading to process respective ones of the connected surface elements to produce offset surface elements for the second boundary representation of the second three-dimensional object in accordance with the offset amount, and identifying portions of the connected surface elements that will not have corresponding portions in the offset surface elements by evaluating a distance field representation of the first three-dimensional object using sampling points taken from the connected surface elements, the offset surface elements, or both.

Identifying portions of the connected surface elements that will not have corresponding portions in the offset surface elements by evaluating the distance field representation of the first three-dimensional object using sampling points taken from the connected surface elements can include, for at least one of the connected surface elements that has been identified as an inverting surface element: taking the sampling points from the at least one inverting surface element; determining a respective offset point for a respective one of the sampling points and a first distance vector from the respective offset point to the respective one of the sampling points; determining, for the respective offset point and using the distance field representation, a nearest point on the first boundary representation and a second distance vector from the respective offset point to the nearest point on the first boundary representation; adding the respective one of the sampling points to a set of inversion points of an inversion region that will not have a corresponding portion in the offset surface elements based on a comparison of the first and second distance vectors; and splitting, from the first boundary representation, a portion of the at least one inverting surface element corresponding to the inversion region, to obtain a non-inverting portion of the first boundary representation.

The method and the operations can include discretizing one or more of the connected surface elements to form a mesh representing at least the at least one inverting connected surface element. The mesh can include vertices from which the sampling points are taken. Determining, for the respective offset point and using the distance field representation, a nearest point on the first boundary representation can include evaluating the distance field representation at the respective offset point using a data structure configured to support searches in three-dimensional space by finding in the data structure a mesh element nearest the offset point.

A mesh representation of the first boundary representation can be stored in the data structure. The mesh representation can include the mesh representing at least the at least one inverting connected surface element. A discretization size of the mesh representation of the first boundary representation can be less than the offset amount.

Using multi-threading to process respective ones of the connected surface elements to produce offset surface elements for the second boundary representation in accordance with the offset amount can include processing the non-inverting portion of the first boundary representation to produce one or more non-inverting offset surface elements for the second boundary representation.

Processing, by the computer aided design program, the boundary representation of the second three-dimensional object for output by a physical device can include displaying, using a graphical user interface, the one or more non-inverting offset surface elements for the second boundary representation and an indication that the inversion region is missing in the second boundary representation.

The methods and the operations can include adding a patch to the one or more non-inverting surface elements for the second boundary representation. The patch corresponds to an approximate offset boundary representation of the inversion region that joins to the one or more non-inverting offset surface elements in a watertight manner.

Adding the patch can include: determining a set of points on the boundary of the inversion region; determining a set of surface normal vectors, each of the surface normal vectors being determined at a respective point of the set of points; generating a mesh patch for the inversion region using the set of points and the set of surface normal vectors; and generating an offset boundary representation corresponding to the mesh patch. The offset boundary representation corresponding to the mesh patch can be generated using loft surfaces or thin-plate splines.

Identifying portions of the connected surface elements that will not have corresponding portions in the offset surface elements by evaluating the distance field representation of the first three-dimensional object using sampling points taken from the offset surface elements can include: taking the sampling points from at least one of the offset surface elements using a predefined distance between the sampling points in three-dimensional space; finding, for a respective sampling point evaluated against the distance field, any of the connected surface elements that are within a distance range from the respective sampling point, wherein the distance range can depend on the offset amount and the predefined distance between the sampling points in three-dimensional space; and removing a first portion of the offset surface elements corresponding to a first portion of the connected surface elements based on a respective sampling point having two or more of the connected surface elements found to be within the distance range.

The methods and the operations can include finding, for each respective sampling point having two or more of the connected surface elements found to be within the distance range, one or more intersection curves between pairs of offset surface elements corresponding to pairs of the two or more of the connected surface elements found to be within the distance range; taking, for each respective sampling point, marching steps along the found intersection curves with a marching step size to determine offset surface elements that belong to candidate edges based on having the pairs of the two or more of the connected surface elements found to be within a marching distance range, wherein the marching distance range can depend on the offset amount and the marching step size; determining candidate vertices that bound the candidate edges; and removing a second portion of the offset surface elements corresponding to a second portion of the connected surface elements using the determined candidate edges and candidate vertices.

Same face candidate edges and same face candidate vertices from the candidate edges and candidate vertices can be determined in a same computing thread. Same face candidate edges and same face candidate vertices can bound a face of the second boundary representation. The methods and the operations can include completing a set of edges that bound the face based on unconnected same face candidate vertices.

Processing, by the computer aided design program, the second boundary representation of the second three-dimensional object for output by a physical device can include displaying, using a graphical user interface, the second boundary representation and an indication that a region of the first boundary representation could not be offset and is missing in the second boundary representation. The methods and the operations can include displaying, using the graphical user interface, a recommended action to apply to the second boundary representation.

The methods and the operations can include replacing areas of the first three-dimensional object having a radius of curvature smaller than the offset amount with one or more circular arcs. Using multi-threading to process respective ones of the connected surface elements to produce offset surface elements for the boundary representation of the second three-dimensional object in accordance with the offset amount can include producing one or more torus faces corresponding to the one or more circular arcs.

The methods and the operations can include subtracting the second boundary representation from the first boundary representation to obtain a shelled version of the first three-dimensional object.

The methods and the operations can include: discretizing one or more of the connected surface elements to form a mesh representation of the first boundary representation; storing the mesh representation in a data structure configured to support searches in three-dimensional space; the evaluating can include evaluating the distance field representation at a selected point using the data structure by finding in the data structure a mesh element nearest the selected point. The selected point can be selected based on a respective sampling point.

Particular embodiments of the subject matter described in this specification can be implemented to realize one or more of the following advantages. The offset operation is more robust than conventional offset operations because a partial offset B-rep can be produced even when some of the input surfaces cannot produce a watertight offset B-rep output. Inverting regions of the input model that would generate self-intersecting offset surfaces can be handled by splitting the input model to separate the inverting regions from the non-inverting regions. The offset of the inverting region can be approximated a posteriori using a patch. An efficient implementation of the distance field is used that accelerates operation. The offset surfaces can be computed precisely, using the distance field to guide the topology solving rather than to create the geometry as in some conventional offset operations. Further, contrary to conventional offset operations, most of the computations can be performed in parallel, e.g., using multi-threading to perform most of the operations independently for each B-rep face.

The details of one or more embodiments of the subject matter described in this specification are set forth in the accompanying drawings and the description below. Other features, aspects, and advantages of the invention will become apparent from the description, the drawings, and the claims.

BRIEF DESCRIPTION OF THE DRAWINGS

FIG. 1 shows an example of a system usable to facilitate computer aided design of objects using distance field based offset and shell operations.

FIGS. 2A-2B show examples of offsetting operations.

FIGS. 3A-3F show an example of a schematic representation of components for generating a data structure that can be used to store a mesh for distance field evaluation. FIGS. 3G-3H show examples of offsetting operations performed with and without using a distance field.

FIG. 4 is a flowchart of an example of a process for distance field based offset operations.

FIGS. 5A-5E show examples of inversion region(s) detection and removal.

FIG. 6 shows an example of a mesh-based patching operation.

FIGS. 7A-7F show examples of offsetting based on torus surfaces.

FIGS. 8A-8B show examples of offsetting operations for a B-rep.

FIG. 9 shows an example of a face of a B-rep.

FIGS. 10A-10D show examples of generating and displaying a partial result of a shell operation.

FIG. 11 is a schematic diagram of a data processing system including a data processing apparatus, which can be programmed as a client or as a server, and implement the techniques described in this document.

Like reference numbers and designations in the various drawings indicate like elements.

DETAILED DESCRIPTION

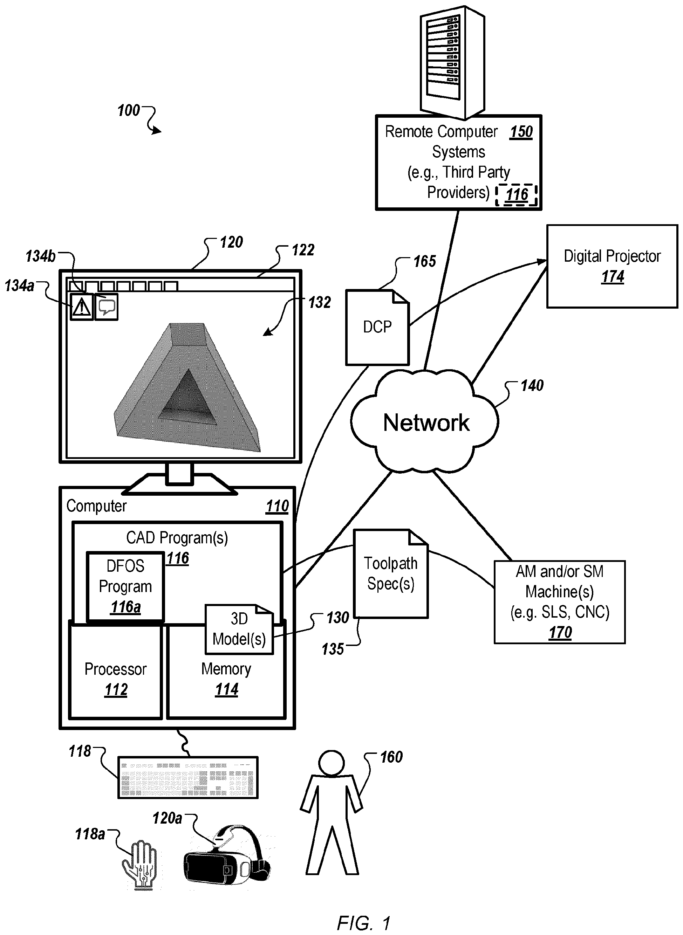

FIG. 1 shows an example of a system 100 usable to facilitate computer aided design and manufacturing of objects. A computer 110 includes a processor 112 and a memory 114, and the computer 110 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including Computer Aided Design (CAD) program(s) 116, which includes a distance field based offset and shell operations subprogram/process 116a.

As used herein, CAD refers to any suitable program used to design objects, regardless of whether or not the program is capable of interfacing with and/or controlling manufacturing equipment. Thus, CAD program(s) 116 can include Computer Aided Engineering (CAE) program(s), Computer Aided Manufacturing (CAM) program(s), etc. The program(s) 116 can run locally on computer 110, remotely on a computer of one or more remote computer systems 150 (e.g., one or more third party providers' one or more server systems accessible by the computer 110 via the network 140) or both locally and remotely. Thus, a CAD program 116 can be two or more programs that operate cooperatively on two or more separate computer processors in that one or more programs 116 operating locally at computer 110 can offload processing operations (e.g., geometry generation and/or physical simulation operations) "to the cloud" by having one or more programs 116 on one or more computers 150 perform the offloaded processing operations. In some implementations, some or all geometry offsetting operations are run by one or more programs in the cloud and not in a geometry representation modeler (e.g., B-Rep modeler) that runs on the local computer. Moreover, in some implementations, the geometry offsetting program(s) can be run in the cloud from an Application Program Interface (API) that is called by a program, without user input through a graphical user interface.

The CAD program(s) 116 present a user interface (UI) 122 on a display device 120 of the computer 110, which can be operated using one or more input devices 118 of the computer 110 (e.g., keyboard and mouse). Note that while shown as separate devices in FIG. 1, the display device 120 and/or input devices 118 can also be integrated with each other and/or with the computer 110, such as in a tablet computer (e.g., a touch screen can be an input/output device 118, 120). Moreover, the computer 110 can include or be part of a virtual reality (VR) and/or augmented reality (AR) system. For example, the input/output devices 118, and 120 can include VR/AR input controllers, gloves, or other hand manipulating tools 118a, and/or a VR/AR headset 120a. In some instances, the input/output devices can include hand-tracking devices that are based on sensors that track movement and recreate interaction as if performed with a physical input device. In some implementations, VR and/or AR devices can be standalone devices that may not need to be connected to the computer 110. The VR and/or AR devices can be standalone devices that have processing capabilities and/or an integrated computer such as the computer 110, for example, with input/output hardware components such as controllers, sensors, detectors, etc.

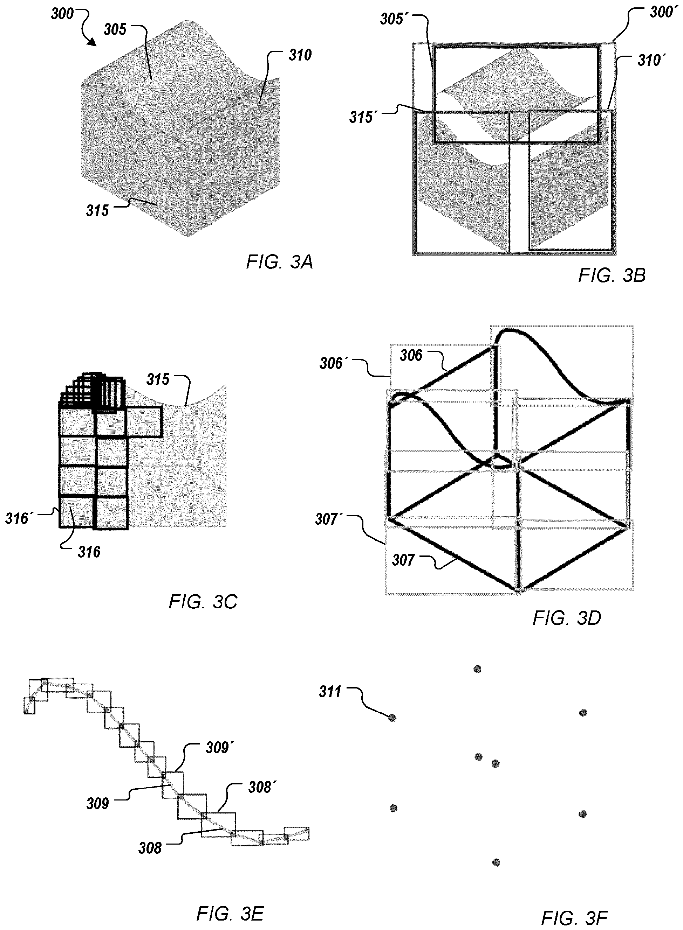

In any case, a user 160 interacts with the CAD program(s) 116 to generate and/or manipulate 3D model(s), which can be stored in model document(s) 130. In the example shown in FIG. 1, 3D model 132 has been generated using shelling operations that employ systems and techniques described in this document.

The CAD program(s) 116 can implement at least one distance field based offset and shell operations process 116a to obtain a shape for a modeled object, e.g., for which a corresponding physical structure can be manufactured. A 3D model of the modeled object can have a boundary representation. For example, the CAD program(s) 116 can use a B-Rep model for the input geometry to a shelling or offsetting process. In general, a boundary representation can use a wide variety of types of surface data structures, including planes, cylinders, T-Splines, NURBS (nonuniform rational B-splines), offset-surfaces, loft surfaces, and/or other surface data structures. The distance field based offset and shell operations 116a can additionally use a tessellated representation (e.g., a mesh such as a triangular mesh) of at least a portion of the modeled object. The distance field based offset and shell operations 116a can use the tessellated representation to evaluate a distance field to determine minimum distances to the model.

The computer model 132 or at least a portion of the computer model 132 can be processed for output by a physical device. For example, at least a portion of the computer model 132 can be rendered to the display device 120. An indication that a region of the model could not be offset and is missing in the second boundary representation can be displayed 134a, using a graphical user interface. A recommended action to apply 134b can also be displayed. In some examples, the recommended action can be to apply a patch to the missing region.

The computer model 132 or at least a portion of the computer model 132 can be stored as a model document 130. The model document 130 can be stored in a permanent storage device. The model document 130 can be used to generate another representation of the model (e.g., toolpath specifications for a manufacturing process for the object or portions thereof). This can be done upon request by the user 160, or in light of the user's request for another action, such as sending the computer model 132 to a one or more computer-controlled manufacturing systems, e.g., additive manufacturing (AM) machine(s) and/or subtractive manufacturing (SM) machine(s) 170, or other manufacturing machinery, which can be directly connected to the computer 110, or connected via a network 140, as shown. This can involve a post-process carried out on the local computer 110 or externally, for example, based on invoking a cloud service running in the cloud, to further process the generated 3D model (e.g., based on considerations associated with the additive manufacturing process) and to export the 3D model to an electronic document from which to manufacture. Note that an electronic document (which for brevity will simply be referred to as a document) can be a file, but does not necessarily correspond to a file. A document may be stored in a portion of a file that holds other documents, in a single file dedicated to the document in question, or in multiple coordinated files. In addition, the user 160 can save or transmit the 3D model for later use. For example, the CAD program(s) 116 can store the document 130 that includes the algorithmically designed model 132.

The CAD program(s) 116 can provide a document 135 (e.g., having toolpath specifications of an appropriate format) to an AM and/or SM machine 170 to produce a physical structure corresponding to at least a portion of the model 132. An AM machine 170 can employ one or more additive manufacturing techniques, such as granular techniques (e.g., Powder Bed Fusion (PBF), Selective Laser Sintering (SLS) and Direct Metal Laser Sintering (DMLS)) or extrusion techniques (e.g., Fused Filament Fabrication (FFF), metals deposition). In some cases, the AM machine 170 can manufacture the physical structure directly using the toolpath specifications. In some cases, the AM machine 170 builds a mold for use in casting or forging the physical structure.

A SM machine 170 can be a Computer Numerical Control (CNC) milling machine, such as a multi-axis, multi-tool milling machine used in the manufacturing process. For example, the CAD program(s) 116 can generate CNC instructions for a machine tool system 170 that includes multiple tools (e.g., solid carbide round tools of different sizes and shapes, and insert tools of different sizes that receive metal inserts to create different cutting surfaces) useable for various machining operations. Thus, in some implementations, the CAD program(s) 116 can provide a corresponding document 135 (having toolpath specifications of an appropriate format, e.g., a CNC numerical control (NC) program) to the SM machine 170 for use in manufacturing the physical structure using various cutting tools, etc.

In addition, in some implementation, no physical manufacturing is involved. The systems and techniques described herein are applicable to any suitable 3D modelling software. Thus, in some implementations, the CAD program(s) 116 can include animation production program(s) that render the 3D model 132 to a document 165 of an appropriate format for visual display, such as by a digital projector 174 (e.g., a digital cinema package (DCP) 165 for movie distribution) or other high resolution display device. The computer model 132 or at least a portion of the computer model 132 can be processed for output by the digital projector, and the processing can include rendering at least a portion of the model 132 to an animation document for the digital projector. Other applications are also possible.

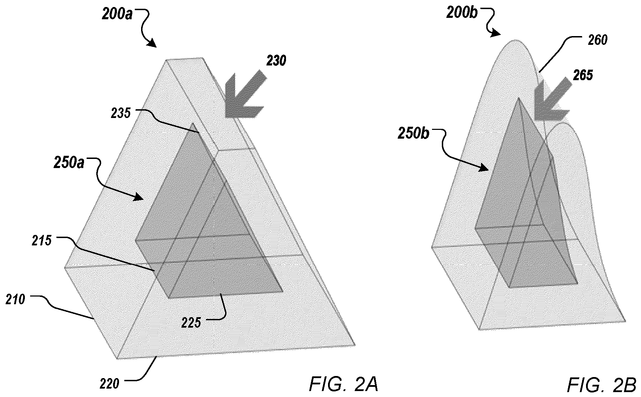

FIGS. 2A-2B show examples of offsetting operations. The shell operation removes all the material from a representation of an object that is further than a predefined (e.g., user defined) offset distance from the surface of the object. In order to do that, the offset geometry for all the elements (i.e., vertices, edges, and faces) of the object should be computed. For some elements, there is a straightforward correspondence between the input element and the corresponding offset element. For example, the offset of a plane is a parallel plane. For surfaces that are more complex the offset is procedural. B-reps are expressed as parametric surfaces that map a two dimensional domain of parameters u, v ($e. g., u \in [a, b], v \in [c, d]$) to points in the 3D space as $p = f(u, v)$. The offset B-rep of $p$ can be generally computed in terms of the offset amount and the normal n(u,v) of the surface as $o = f(u, v) + n(u, v) * offset$ where the normal can be determined as the cross product of the first partial derivatives with respect to the parameters u, v as

$$n(u, v) = \frac{cross\_product(\frac{\partial f(u.v)}{\partial u}, \frac{\partial f(u.v)}{\partial v})}{\left\| cross\_product(\frac{\partial f(u.v)}{\partial u}, \frac{\partial f(u.v)}{\partial v}) \right\|}.$$

Offset edge curves can be computed by intersections of the offset surfaces of adjacent faces. Offset vertex positions are defined by intersections of the offset curves of adjacent edges with the offset surfaces around the vertex.

Several issues can arise during the computation of offset geometries. For example, the topology of the offset can be different from the topology of the input model. FIG. 2A shows an input model 200a and its corresponding offset 250a. The input and offset models 250a can be B-reps. Some of the surface elements 210, 220 of the input model have corresponding elements 215, 225 in the offset model. However, face 230 of the input model 250a disappears in the offset model 250a as face 230 offsets to edge 235. FIG. 2B shows offset model 250b that has an edge 265 that has no corresponding edge in the input model 200b. Rather, edge 265 is the result of offsetting inversion region 260. Offsetting inversion region 260 is a complex operation since it involves the computation of self-intersections of offset surfaces. In general, the self-intersection of an offset surface is difficult to handle because the properties of the surface near the self-intersection are not well defined.

To determine a B-rep model that is at constant offset distance from the input model, a high-performance distance field algorithm, which can find the nearest point on the input B-rep, can be used to compute the distance from the input body's exterior. The distance field is a scalar field defined in any point of the space as the minimum distance to a point on the surface of the input B-rep. Distance fields can be represented using iso-surfaces, i.e., surfaces where the distance field has a same value. Iso-surfaces corresponding to the external profile of the input model would correspond to an iso-surface with a distance field value equal to zero.

Any suitable distance field evaluation can be used with the techniques of this disclosure. In some examples, a fast distance field evaluator from a sampling point to the input B-rep, which also returns all the surface elements (faces, edges and vertices) within a distance range, is implemented. To achieve a fast implementation, the input B-rep is converted to a discrete mesh representation using a faceting algorithm and the distance to this mesh is computed. Finding the distance to a triangle mesh can be much faster than finding the distance to a B-rep. To make the distance to mesh computation efficient, the mesh can be stored using a data structure that accelerates searching data in 3D space. In some examples, r-trees are used. In some examples, a bounding volume hierarchy (BVH) structure is used. Discretizing the input B-rep and storing the mesh in a data structure that allows 3D searching, and projecting back to the B-rep, provides an efficient implementation for distance field evaluation.

FIG. 3A shows an example mesh representation 300 obtained by discretizing an input B-rep. Mesh representation 300 shows three visible input B-rep faces 305, 310, 315 that are discretized using a mesh size. Mesh elements (e.g., mesh triangles) corresponding to B-rep elements (i.e., B-rep faces, edges, and vertices) are stored in the BVH structure according to their bounding boxes.

FIG. 3B shows a schematic representation of a bounding box 300'corresponding to mesh representation 300 as well as bounding boxes 305', 310', 315' corresponding respectively to faces 305, 310, 315. A separate face BVH structure can be created for each face 305, 310, 315 according to their bounding boxes 305', 310', 315'.

FIG. 3C shows a schematic representation of example bounding boxes 316' corresponding to mesh elements 316 belonging to face 315. For each separate face, BVH stores the mesh elements (e.g., mesh triangle 316) belonging to the respective face according to their bounding boxes (e.g., bounding box 316').

Each tessellated version of each edge of the input B-rep is also stored in a separate edge BVH structure. FIG. 3D shows edges 306, 307 of the input B-rep and a schematic representation of corresponding bounding boxes 306', 307'. Each edge BVH stores the segments of the polyline approximation of the respective edge according to their bounding boxes. FIG. 3E shows example segments 308, 309 of a polyline approximation of an edge and corresponding bounding boxes 308', 309'. All the points corresponding to vertices of the input B-rep are also added to a vertex BVH storing the vertex positions. FIG. 3F shows vertices 311 that will be stored in the vertex BVH. All these faces, edges, and vertex BVHs can in turn be nested in a BVH containing the discretized version of all the edges, faces, and vertices of the input model.

In some examples, only edges and vertices which will contribute to the offset B-rep are added to the BVH. For example, edges between two convex adjacent faces can be ignored. When offsetting inwards, there will not be a rounded surface generated by that edge because the adjacent faces will always be closer to any point on the inside than that edge, i.e., that edge will never be found as the closest point to any point. Rules for ignoring edges and vertices can be deduced from analysis of whether or not it is possible that the offset B-rep could contain a surface derived from said edges and vertices. This can be found from the angle range between the faces around said edges and vertices. For example, convex edges can be ignored since a convex edge will not create an offset face when offsetting inwards. As another example, vertices on only convex edges can also be ignored. On the other hand, if a vertex is on both concave and convex edges it may or may not contribute to the offset so it cannot be ignored.

The distance field algorithm implements a function that returns elements of the input B-rep within a given distance range [min_distance, max_distance] of the sampling position provided the closest point is not closer than the lower end of the distance range. If the closest point is too close, then nothing is returned. For example, the pseudocode of the function prototype could be

```
structure entity _in_range{
        position closest_point_on_entity
        integer entity_id
}
list<entity_in_range> get_entitites_in_range{position P, real min_distance, real
max_distance}
```

The BVHs of the elements are traversed while skipping any branches of the trees where the bounding box for that branch is outside the given range of the sampling position. For the faces and edges whose bounding box is within range, the closest point on the mesh or polyline is found by further traversing their BVH structures. For all elements where the closest point is within the distance range, the position and identification of the element is returned.

The distance field can be used to determine how to combine the offset surfaces into a legal, watertight, non self-intersecting B-rep model which is everywhere at the correct offset distance from the input B-rep. The use of the distance field allows rapid selection of the relevant pieces of this offset. The method works by finding the trimming of the precise B-rep offset surfaces to form the bounded faces that meet at watertight edges. Contrary to conventional approaches, the distance field is used here to guide the topology solving rather than to create the geometry approximately. The offset B-rep can be generated by stitching a trimmed offset surface of all faces, concave edges, and concave vertices in the input B-rep. To compute the final geometry, pipe surfaces can be generated around concave edges and spheres can be generated around concave vertices.

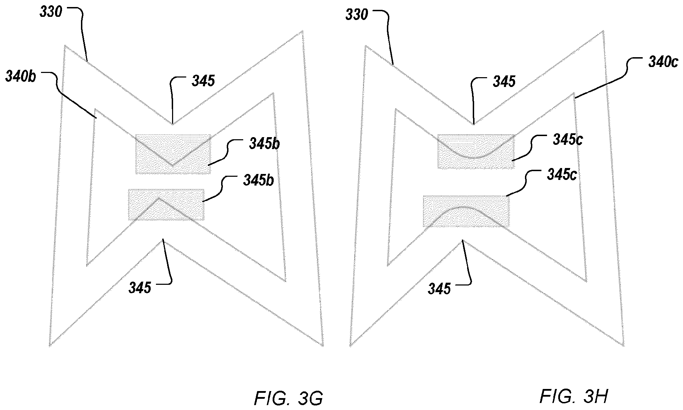

FIGS. 3G-3H show examples of offsetting operations performed with (FIG. 3H) and without (FIG. 3G) using the distance field approach described in this disclosure. FIG. 3G shows an input B-rep 330 that is offset inwards by an offset distance using a traditional approach to generate offset B-rep 340b. Concave vertices 345 are offset using surface extensions 345b to generate a corresponding offset B-rep 340b. FIG. 3H shows the same input B-rep 330 that is offset inwards by the same offset distance using the distance field approach described in this disclosure. Concave vertices 345 offset to rounded corners 345c where all the points are at the offset distance from the input B-rep 330, thus generating a corresponding offset B-rep 340c.

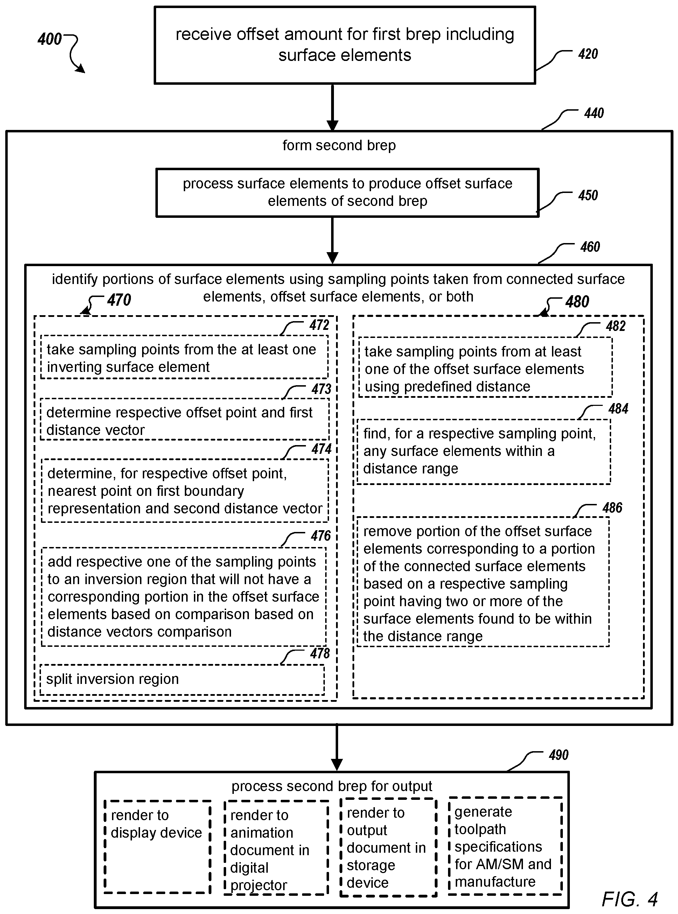

FIG. 4 is a flowchart of an example of a process 400 for distance field based offset operations. At 420, an offset amount for a first boundary representation of a first three-dimensional object is received by a computer aided design program. The first boundary representation includes connected surface elements defining a boundary between interior and exterior portions of the first three-dimensional object.

At 440, a second boundary representation of a second three-dimensional object is formed by the computer aided design program. The second three-dimensional object is an offset version of the first three-dimensional object. Forming the second boundary representation includes processing 450 respective ones of the connected surface elements to produce offset surface elements for the second boundary representation of the second three-dimensional object in accordance with the offset amount. In some examples, the processing 450 includes processing (e.g., multi-thread processing) and identifying 460 portions of the connected surface elements that will not have corresponding portions in the offset surface elements by evaluating a distance field representation of the first three-dimensional object using sampling points taken from the connected surface elements, the offset surface elements, or both.

At 490, the computer aided design program processes the second boundary representation of the second three-dimensional object for output by a physical device. In some examples, the physical device can include a display device, and the processing can include rendering at least a portion of the second boundary representation of the second three-dimensional object to the display device. In some examples, the physical device includes a permanent storage device, and the processing includes rendering at least a portion of the second boundary representation of the second three-dimensional object to an output document stored in the permanent storage device. In some examples, the physical device includes a digital projector, and the processing includes rendering at least a portion of the second boundary representation of the second three-dimensional object to an animation document for the digital projector. In some examples, the physical device includes one or more computer-controlled manufacturing systems that can include an additive and/or subtractive manufacturing machine, and the processing includes generating toolpath specifications for the one or more computer-controlled manufacturing systems (e.g., the additive and/or subtractive manufacturing machine) using at least a portion of the second boundary representation of the second three-dimensional object; and manufacturing at least a portion of a physical structure corresponding to the second boundary representation of the second three-dimensional object with the one or more computer-controlled manufacturing systems (e.g., the additive and/or subtractive manufacturing machine) using the toolpath specifications generated for the additive and/or subtractive manufacturing machine.

In some examples, the identifying 460 includes detecting and splitting any inversion regions from the input B-rep, which includes identifying 470 portions of the connected surface elements that will not have corresponding portions in the offset surface elements by evaluating the distance field representation of the first three-dimensional object using sampling points taken from the connected surface elements. This can include, for at least one of the connected surface elements that has been identified as an inverting surface element, taking 472 the sampling points from the at least one inverting surface element. At 473, a respective offset point for a respective one of the sampling points is determined. A first distance vector from the respective offset point to the respective one of the sampling points can be determined. At 474, it is determined, for the respective offset point and using the distance field, a nearest point on the first boundary representation and a second distance vector from the respective offset point to the nearest point on the first boundary representation. At 476, the respective one of the sampling points is added to a set of inversion points of an inversion region that will not have a corresponding portion in the offset surface elements based on a comparison of the first and second distance vectors. At 478, a portion of the at least one inverting surface element corresponding to the inversion region is split from the first boundary representation, to obtain a non-inverting portion of the first boundary representation. The result of the splitting is that the inverting portion is demarcated in the B-rep such that it can be ignored and/or removed.

In some examples, the identifying 460 includes discarding any portions of the input B-rep that will not be needed in the offset B-rep based on an initial assessment of the topology of the offset B-rep, which includes identifying 480 portions of the connected surface elements that will not have corresponding portions in the offset surface elements by evaluating the distance field representation of the first three-dimensional object using sampling points taken from the offset surface elements. This can include taking 482 the sampling points from at least one of the offset surface elements using a predefined distance between the sampling points in three-dimensional space. At 484, for a respective sampling point evaluated against the distance field, any of the connected surface elements that are within a distance range from the respective sampling point are found, wherein the distance range depends on the offset amount and the predefined distance between the sampling points in three-dimensional space. At 486, a portion of the offset surface elements corresponding to a portion of the connected surface elements is removed based on a respective sampling point having two or more of the connected surface elements found to be within the distance range. As explained in more detail below, samples which have two or more elements within the distance range can be determined to be at the boundary between the portion of the connected surface elements that is to be removed and the portion that is to be kept.

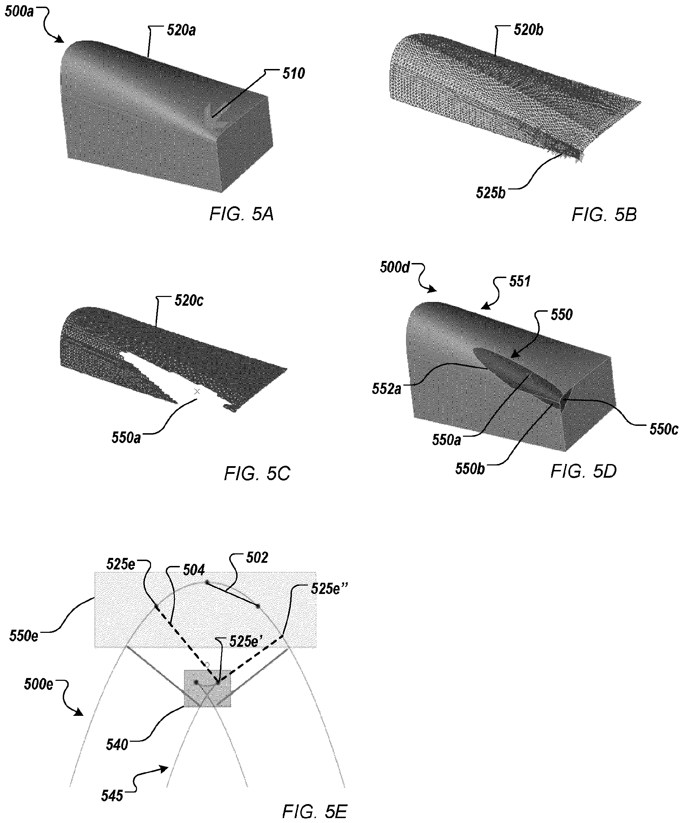

Note that detection and splitting of any inversion regions, and discarding any unneeded portions of the input B-rep based on an initial assessment of the topology of the offset B-rep, can both be done for a same input B-rep, e.g., in parallel, such as using multi-threading. Thus, the identifying 460 can include both identifying 470 and identifying 480. FIGS. 5A-5D show examples of inversion regions detection and removal.

In some examples, before computing the offset B-rep, the method can check if any faces of the input B-rep have surfaces that will invert when offsetting. This can be done by generating the procedural offset surface for each face and checking whether any of the generated offset surfaces has potential self-intersections portions. This can be done by performing legality checks on the surfaces. For example, the first partial derivatives of the surface in parametric form with respect to the parameters can be used as described above to determine the normal to the surface, which should not be null. Near the inversion, this property is not satisfied. For any surface element that is identified as an inverting (i.e., self-intersecting) element, the method finds the inverting region and splits the input model into an inverting region and a non-inverting region.

FIG. 5A shows an input B-rep 500a with an area 510 that has been determined to cause inversion. FIG. 5B shows faceting 520b of face 520a. The resulting mesh 520b (e.g., a triangular mesh) can be used as a discrete way of finding the inverting sub-region 550a of that face using sampling points 525b. FIG. 5C shows the found inversion sub-region 550a of that face and the remaining non-inverting region 520c of face 520a. The boundary of the inversion sub-region 550a can be approximated with a boundary curve. The procedure can be repeated for adjacent faces to obtain all the points belonging to each face inversion sub-region 550a, 550b, 550c that together make up the inversion region 550 and to obtain all the boundary curves bounding the inversion region 550. The input B-rep can then be split into a non inverting region and an inverting region 550 bound by edges 552a generated from the approximated boundary curves. FIG. 5D shows the final input B-rep 500d split into a non-inverting region 551 and an inverting region 550.

For simplicity, the procedure for detecting the inversion region is described in 2D with reference to FIG. 5E. As described above, an input B-rep 500e is discretized and a mesh (or polyline in 2D) is generated using a mesh size (e.g., an edge length of a mesh element in 3D or a segment length in 2D) 502. In some examples, input B-rep 500 can be discretized using a mesh size 502 that is smaller than the offset amount 504. The mesh vertex positions 525e can be used as sampling points. The mesh vertex positions 525e are offset by the offset amount 504 to find offset positions on an offset surface 545. For each sampling point, the corresponding offset position can be computed by moving from the vertex position 525e along the normal to the input surface at that position by the offset amount 504. The distance field can be evaluated at the offset position 525e' to see if the point 525e' is too close to the input B-rep. The input B-rep is then split with edges that bound the inverting region 550e that maps to inverted region 540 beyond the point where the offset B-rep self-intersects.

In some examples, a vertex 525e (V) of the input mesh can be selected as sampling point, and a corresponding offset vertex 525e' (V') on the offset surface can be found by moving along the normal by a distance based on an offset amount. In some examples, the distance is equal to the offset amount plus a tolerance amount.

The offset vertex 525e' (V') can be projected back onto the input surface using the distance field to obtain the nearest input vertex 525e" (V".)

If distance vector V"-V' from the offset vertex to the nearest input vertex does not have the same direction as distance vector V-V' from the offset vertex to the sampling vertex, the offset point 525e' is near or beyond the self-intersection point and the mesh elements (e.g., segments of a polyline, triangles of a triangular mesh) around the sampling point, i.e., input vertex 525e, belongs to the inverting region that should be split in the input B-rep.

Turning again to FIG. 5D, once the input B-rep is split into an inverting region 550 and an non-inverting region, the offset B-rep of the non-inverting portion 500d can be generated using any offsetting algorithm. For example, a precise offsetting algorithm can be used. In some examples, the offset B-rep is computed using a distance field approach as described with respect to method 480 and described in more detail below.

The resulting offset B-rep will have a missing region corresponding to the inversion region 550c. In some examples, a patch can be generated for the missing region. In some examples, a mesh-based patching operation can be used.

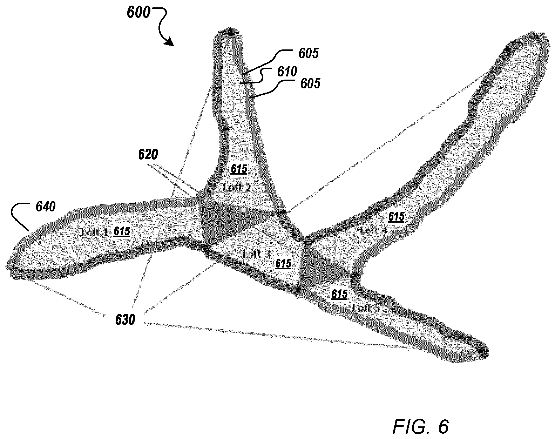

FIG. 6 shows an example of a mesh-based patching operation. Region 600 encloses a hole to be patched. The boundary of region 600 can be detected. A polyline 640 can be created along the boundary. For each of a set of sampling points 605 along the boundary 640, information about the normal of the adjacent face of the B-rep is extracted. In some examples, where there is more than one adjacent face, an average of the normals of the adjacent faces at the sampling point is extracted. Based on this information, a mesh patch including mesh elements 610 is generated covering the hole 600. The generated mesh patch has no internal vertices. The vertices 605 of the mesh patch are on the boundary 640 of the hole. Based on the mesh elements, the mesh patch is divided into sections 615. In some examples, one or more of the sections can be filled using a thin-plate splines. In some examples, one or more of the sections can be filled using a loft surface. The mesh is used to partition the hole boundary 640 into portions that can be connected with a loft surface 615.

If the mesh patch is a triangular mesh and mesh elements 610 are mesh triangles, each of the mesh triangles can, in theory, have zero, one, two, or three edges on the boundary. Mesh elements with three edges on the boundary can be ignored as this case will not happen in practice. Mesh elements 630 with two edges on the boundary can be used to split the boundary 640 into portions that can be connected with a loft surface 615. Mesh elements 620 with zero edges on the boundary can be used to create triangular planes. Triangles with one edge on the boundary do not need any special treatment, because they will be inside one of the loft surfaces.

The result of the patching operation is a watertight patched offset B-rep including the patch and the non-inverting offset B-rep.

The patched offset B-rep can be subtracted from the input B-rep to obtain a shelled version of the input B-rep with a thickness substantially equal to the offset amount.

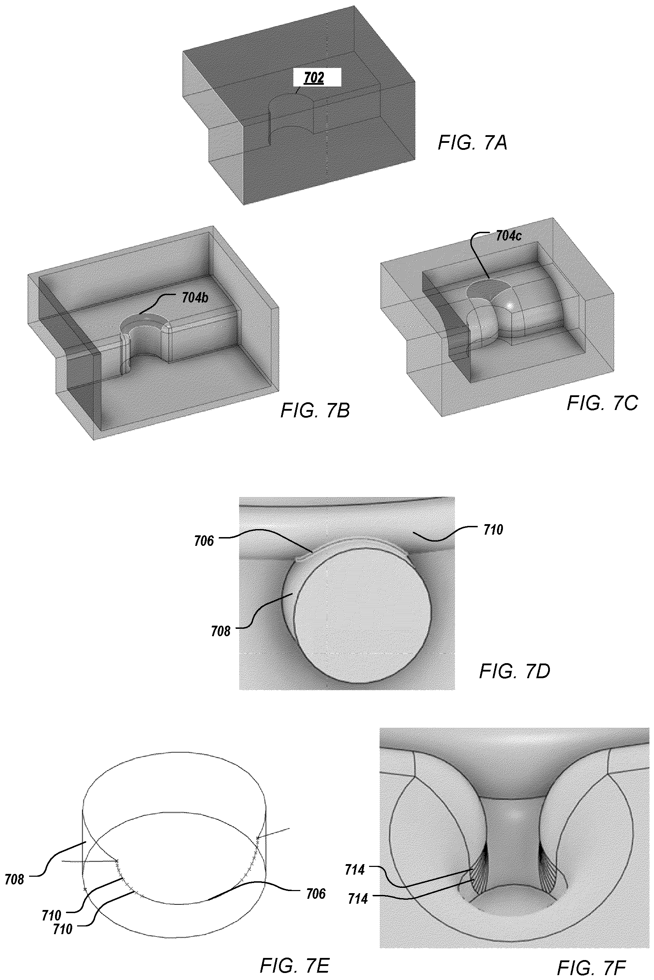

FIGS. 7A-7F show examples of offsetting based on torus surfaces. Fitting of a B-rep to a distance field iso-surface requires the creation of surfaces for every concave, non-smooth edge (i.e., the two surfaces adjacent to the edge have different normal directions and will thus not offset in the same direction) where every point on the surface is a constant offset distance away from the closest point on the edge.

FIG. 7A shows an example of an input B-rep with a circular, concave, non-smooth edge 702. For circular edges, a torus surface 704b with a major radius equal to the circular edge radius and a minor radius equal to the offset distance can be used as an offset surface, as shown in FIG. 7B. Tori meet the requirement of a surface that is at a constant distance from the input edge, even when the offset distance is greater than the radius of the input circular edge, as is the case for torus surface 704c in FIG. 7C.

Unless the input edge is a straight line or a circular edge, offsetting distances greater than the minimum radius of curvature of an edge gives rise to offsetting issues. FIG. 7D shows an example of a non-circular, concave, non-smooth edge 706 of an input B-rep. Edge 706 corresponds to an intersection curve between a cylinder face 708 and of a torus face 710. Edge 706 has a radius of curvature that changes continuously along its length. At its start and end points, the radius of curvature can be less than the offset distance while in the middle the radius of curvature can be greater than the offset distance. Where the radius of curvature of the edge 706 is less than the offset distance, the surface inverts on one side, which means that the surface normal flips direction. At the point where the radius of curvature exactly equals the offset distance, the surface has "bad" properties such as a sudden discontinuity in the surface normal, i.e., the surface is non-smooth.

To solve this problem, the input B-rep can be modified by replacing high curvature regions (i.e., regions where the radius of curvature is less than the offset distance) of concave edges with a sequence of tangent arcs that approximate the input shape and that can be reliably offset. High curvature edges can be split into ranges where the radius of curvature is either greater than or less than the offset distance. For the ranges where the radius is less than the offset distance, that range is further split into shorter segments that can be replaced by circular arcs. These arcs can be offset to torus faces.

FIG. 7E shows the same input body of FIG. 7D after parts of the edge 706 have been replaced with circular arcs 710. Circular arcs approximate the input edge 706 up to a selected tolerance. The circular arcs are chosen to fit as closely as possible to the input edge while meeting each other precisely and smoothly (i.e., G0 and G1 continuity are preserved).

FIG. 7F shows the offset body corresponding to edge 706 and its surroundings created after splitting the high curvature edge 706 and replacing parts of it with circular arcs 710. Each arc edge 710 generates a torus offset surface 714 which can be solved to find its correct trimming using, e.g., a distance field fitting approach.

The distance field can be used to determine how to combine the offset surfaces into a legal, watertight, non self-intersecting B-rep model which is everywhere at the correct offset distance from the input B-rep. The use of the distance field allows to select the relevant pieces of this offset. The method works by finding the trimming of the precise B-rep offset surfaces to form the bounded faces that meet at watertight edges. Contrary to conventional approaches, the distance field is used here to guide the topology solving rather than to create the geometry approximately.

To enable parallel (e.g., multi-thread) processing, a thread-safe geometry cache can be implemented. This allows that different threads can request surfaces and intersection geometry from the geometry cache concurrently without causing race conditions or inefficient processing. In some examples, a concurrent hash map can be used to implement the geometry cache. The geometry cache takes as input B-rep surface elements (i.e., faces, edges, and vertices). Since any of these elements can create surfaces in the offset B-rep they can all be treated in a similar way.

The geometry cache can implement several functions. In some examples, the geometry cache can implement a function that accepts a surface element as argument (e.g., get_offset_surface(ENTITY)) and returns an offset surface for the surface element. In some examples, the geometry cache can implement a function that accepts two surface elements as arguments (e.g., get_intersections(ENTITY, ENTITY)) and returns the intersection curve or curves between the offset surfaces of two elements. In some examples, the geometry cache can implement a function that accepts an intersection curve and a surface element as arguments (e.g., get_intersections(CURVE, ENTITY)) and returns the intersection points between the intersection curve and the offset surface of the element. In some examples, the latter function can be used to compute vertex positions.

The first time some geometry is requested from the geometry cache, it can be computed, stored, and a reference to it returned. When the same geometry is requested thereafter, a reference to the already cached geometry is returned.

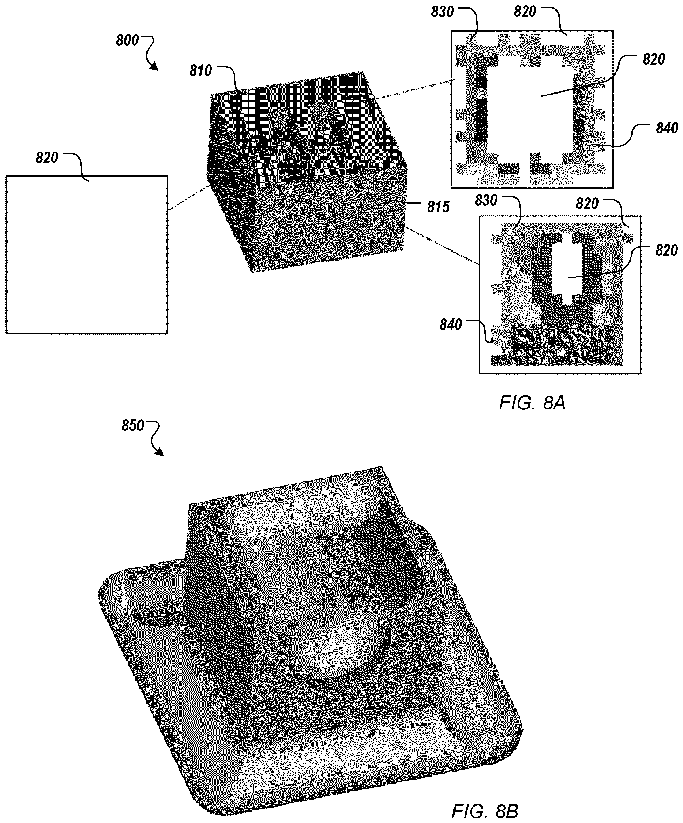

FIG. 8A shows an example input B-rep 800 including several faces (e.g., faces 810, 815). In some examples, the input B-rep can be a non-inverting portion of a B-rep, where the inverting portion has previously been removed using, e.g., method 470. FIG. 8B shows an offset B-rep 850 corresponding to input B-rep 800.

An initial guess at the topology of the offset B-REP can be determined by sampling the distance field over the offset elements. In some examples, sampling points over the offset surface parameter domain of each input face, edge and vertex can be taken using a grid of points. At the offset position of each sample, the distance field can be evaluated. The sampling points can have a predefined separation distance x in the three-dimensional space. The separation distance x can be used for determining a distance range to be passed to the distance field evaluation. For example, the distance field for all entities and their closest points on the input B-rep can be requested within the range [offset - x, offset + x]. This guarantees that all the entities that could potentially intersect near that offset point can be found.

Samples that find that no input B-rep elements exist within the distance range can be ignored. These samples are in regions where the offset surface is too close to the input B-rep.

Samples that only find the input element we are sampling from is within the distance range can also be ignored. These samples are in a region belonging to the interior of an offset B-rep face and not near an edge of that face.

Samples that find two or more input B-rep elements within the distance range are of interest. These samples are in a region that can correspond to an edge of the offset B-rep.

An example of a number of elements found within a distance range for a certain offset amount and predefined spacing distance is shown in FIG. 8A for input faces 810, 815. Elements 820 correspond to samples that find that no input B-rep elements exist within the distance range. Darker elements (e.g., 830, 840) correspond to samples that find two or more input B-rep elements within the distance range. Elements 830, 840 colored in different shades of gray correspond to different numbers of input B-rep elements found within the distance range.

For the samples with multiple elements within distance range, each pair of elements is considered and the intersection curves (if any) between the offset curves of each pair of elements are determined. For example, a function of the geometry cache as described above can be used to determine if and how many intersection curves exist for each pair of elements.

After determining the intersection curves, the process can determine which parts of those intersection curves, if any, will be turned into edges. To do this, the sampling offset point is projected onto each intersection curve and steps are taken along the curve. Curves have a parametric function definition such that the position along the curve is defined as a function f(t) of a parameter t. To step or march along the curve, parameter t can be increased or decreased in marching steps of dt size. Taking smaller t steps, i.e., decreasing dt, increases the resolution of the marching along the curve.

At each t step, the distance field can be evaluated to check that the two closest input B-rep elements are the two elements from which the intersection curve was generated. For example, the distance field can be evaluated in a distance range [offset - dP, offset + dP], where dP is a 3D step size. In some examples, dP can be estimated based on the first derivative of the parametric function of the curve f(t) and the marching step size dt along the curve. Stepping along the curve with a step size dt produces a dP step distance in 3D that can be estimated as dP=dt * f(t) where f(t) is the first derivative of the curve f(t). If the intersection curve gets too close to the input B-rep, the distance field does not return any elements in the range. If the intersection curve gets too far from either of the two elements from which the intersection curve was generated, that element will not be returned by the distance field. Some intersection curves will have no points that will be part of an edge. These intersection curves can be ignored.

Stepping along the intersection curve gives an approximate range for the offset edge. Taking smaller t steps provides more accurate values for the start and end points of the offset edge range. In some examples, a binary search can be performed. The t step size is halved each time adjacent points are found where one point is on the edge and the next point is not on the edge. Once the step size is below a threshold, the marching can be stopped.

Next, vertex positions are found to bound the edge. Vertex positions can be found by intersecting intersection curves with offset surfaces. Elements found to be within the range at the last distance field evaluation are used for the determination. For each pair of found elements, the intersection curves of corresponding offset surfaces are determined. In some examples, a function of the geometry cache as described above can be used.

Next, intersection points between each determined intersection curve and each offset curve of each one of the rest of the elements in the range are determined. In some examples, a function of the geometry cache as described above can be used. Intersection points between surfaces and curves tangent to those surfaces can be ignored because they will not provide vertex positions. When a curve is tangent to a surface, the intersection between them is the curve itself, rather than a point, so the intersection does not provide a vertex position. The intersection points are tested against the distance field to make sure they are at the offset distance from the input B-rep. If this is the case, they are selected as candidate vertices. Candidate vertex positions are projected onto the intersection curve. If they are within a predefined tolerance of the intersection curve, the candidate vertex position will be used as candidate vertices to bound the corresponding candidate edge.

The determination of candidate edges, edge ranges, and vertex positions can be executed independently for each offset face of each input element. In some examples, these computations can be multi-threaded, where each face is computed as a separate multi-threading task. Although multi-threading is computationally advantageous, the method can also be executed sequentially, e.g., using a single computation thread.

The set of candidate edges and vertices that have been found to bound the offset faces of each respective input element may be incomplete due to the resolution limitations imposed by discrete marching. For example, small pieces of one or more intersection curves might have been missed during marching. To obtain the final set of edges and vertices, the start and end positions of each edge can be tested against the start and end positions of all the other edges. This can provide a graph of the connectivity of all the edges.

If every edge is either connected to another edge at both its start and end or if its start and end coincide (i.e. a closed edge), the set of edges is complete. If some edges do not meet another edge at one or both of their ends, a further search is performed to find more edges to fill the gaps. At each unconnected vertex of a candidate edge, the distance field is evaluated to find all the elements within a distance range [offset - tolerance, offset + tolerance]. The tolerance can be determined based on the precision of the distance field evaluation. The intersection curves for each pair of elements in range are determined. For example, the intersection curves can be retrieved from the geometry cache. The newly found intersection curves can then be converted into candidate edges and vertices, as described above. This process can be repeated until there are no more gaps, or the gaps do not yield any more edges. This process can also be performed independently for each offset face so multi-threading can be used to solve each face independently.

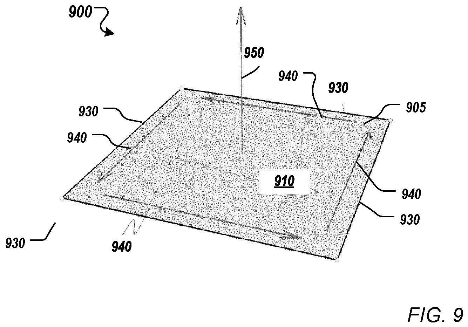

Once all the candidate edges and vertices have been found, the method can search for cycles in the edge connectivity graph to determine the face loops that define the faces of the offset B-rep. FIG. 9 shows an example of a face 900 of a B-rep. Loop 910 defines the portion of surface 905 inside face 900. Loop 910 can be constructed from edges 930 by finding cycles formed by a set of adjacent coedges 940 that have a direction determined by the normal 950 of the face 900 and of the normals of adjacent faces.

In some examples, the loop solving can be performed in a sequential manner. In regions where surfaces are close to tangent to each other, there can be ambiguities due to pairs of edges which could each be used but that can't both be used. By performing the loop solving sequentially, the choice of edges for one face can be made to match the choice of edges for an adjacent face. This way the faces can be stitched into a watertight model.

The connected loops of edges and vertices can be converted to B-rep faces. The faces can be stitched into a watertight offset B-rep. In some examples, a check can be performed to ensure that the resulting offset B-rep is compliant. Healing can be applied to fix remaining issues. For example, healing can be applied to ensure that every face is completely connected.

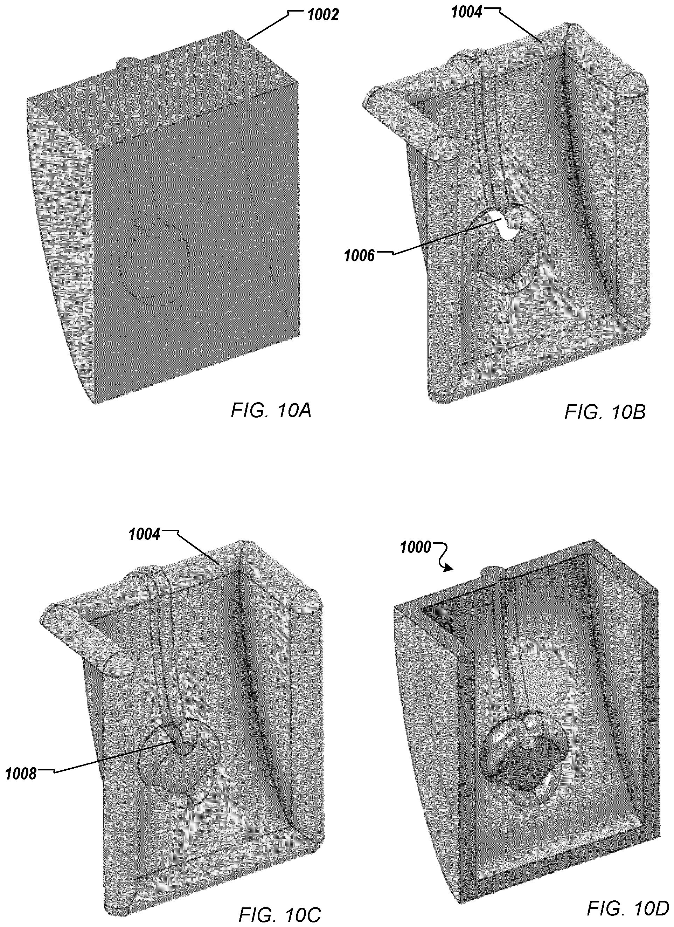

FIGS. 10A-10D show examples of generating and displaying a partial result of a shell operation. Since the offset operation can be performed independently for each element, if an element has failed to provide a corresponding offset element that does not self-intersect and that stitches correctly with adjacent elements, the portion of the offset corresponding to the other entities can still be processed for output. FIG. 10A shows an example input B-rep 1002. FIG. 10B shows a corresponding offset sheet 1004 generated with techniques described in this disclosure. FIG. 10B shows an example of a partial result offset sheet 1004 that has a hole 1006 caused by a surface-surface intersection problem that prevented the trimming of one of the offset surfaces. In some examples, a patch such as the mesh-based patch described with reference to FIG. 6 can be used to generate a watertight body. For example, FIG. 10C shows partial result offset sheet 1004 repaired with a patch 1008. FIG. 10D shows the shelled body 1008 generated based on offset 1004.

But even if the hole is not patched, partial result offset sheet 1004 as shown in FIG. 10B can be processed for output. For example, a user might only be interested in the parts of the offset 1004 that were successfully offset.

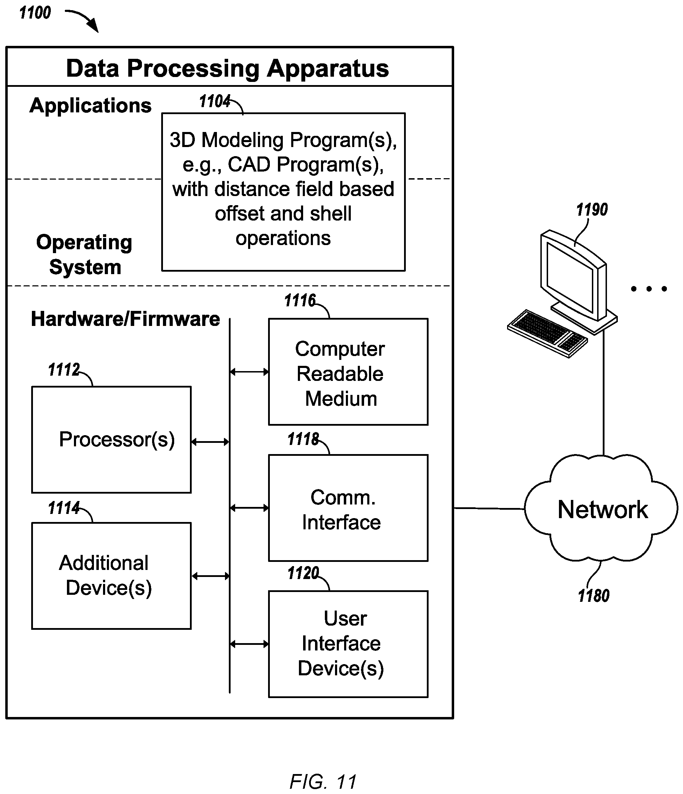

FIG. 11 is a schematic diagram of a data processing system including a data processing apparatus 1100, which can be programmed as a client or as a server, and is usable to facilitate computer-aided design of objects using distance field based offset and shell operations. The data processing apparatus 1100 is connected with one or more computers 1190 through a network 1180. While only one computer is shown in FIG. 11 as the data processing apparatus 1100, multiple computers can be used. The data processing apparatus 1100 includes various software modules, which can be distributed between an applications layer and an operating system. These can include executable and/or interpretable software programs or libraries, including tools and services of one or more 3D modeling programs 1104 that implement offset and shell operations on B-rep models using a distance field, as described above. Thus, the 3D modeling program(s) 1104 can be CAD program(s) 1104 (such as CAD program(s) 116) and can implement one or more offset a. Further, the program(s) 1104 can potentially implement manufacturing control operations (e.g., generating and/or applying toolpath specifications to effect manufacturing of designed objects). The number of software modules used can vary from one implementation to another. Moreover, the software modules can be distributed on one or more data processing apparatus connected by one or more computer networks or other suitable communication networks.

The data processing apparatus 1100 also includes hardware or firmware devices including one or more processors 1112, one or more additional devices 1114, a computer readable medium 1116, a communication interface 1118, and one or more user interface devices 1120. Each processor 1112 is capable of processing instructions for execution within the data processing apparatus 1100. In some implementations, the processor 1112 is a single or multi-threaded processor. Each processor 1112 is capable of processing instructions stored on the computer readable medium 1116 or on a storage device such as one of the additional devices 1114. The data processing apparatus 1100 uses the communication interface 1120 to communicate with one or more computers 1190, for example, over the network 1180. Examples of user interface devices 1120 include a display, a camera, a speaker, a microphone, a tactile feedback device, a keyboard, a mouse, and VR and/or AR equipment. The data processing apparatus 1100 can store instructions that implement operations associated with the program(s) described above, for example, on the computer readable medium 1116 or one or more additional devices 1114, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. In addition, actions recited in the claims can be performed in a different order and still achieve desirable results.

EMBODIMENTS

Although the present invention is defined in the claims, it should be understood that the present invention can also (alternatively) be defined in accordance with the following embodiments:

1. A method comprising:

receiving, by a computer aided design program, an offset amount for a first boundary representation of a first three-dimensional object, the first boundary representation comprising connected surface elements defining a boundary between interior and exterior portions of the first three-dimensional object;

forming, by the computer aided design program, a second boundary representation of a second three-dimensional object, the second three-dimensional object being an offset version of the first three-dimensional object, wherein the forming comprises

using multi-threading to process respective ones of the connected surface elements to produce offset surface elements for the second boundary representation of the second three-dimensional object in accordance with the offset amount, and

identifying portions of the connected surface elements that will not have corresponding portions in the offset surface elements by evaluating a distance field representation of the first three-dimensional object using sampling points taken from the connected surface elements, the offset surface elements, or both; and

processing, by the computer aided design program, the second boundary representation of the second three-dimensional object for output by a physical device.

2. The method of embodiment 1, wherein identifying portions of the connected surface elements that will not have corresponding portions in the offset surface elements by evaluating the distance field representation of the first three-dimensional object using sampling points taken from the connected surface elements comprises, for at least one of the connected surface elements that has been identified as an inverting surface element:

taking the sampling points from the at least one inverting surface element;
determining a respective offset point for a respective one of the sampling points and a first distance vector from the respective offset point to the respective one of the sampling points;
determining, for the respective offset point and using the distance field representation, a nearest point on the first boundary representation and a second distance vector from the respective offset point to the nearest point on the first boundary representation;
adding the respective one of the sampling points to a set of inversion points of an inversion region that will not have a corresponding portion in the offset surface elements based on a comparison of the first and second distance vectors; and
splitting, from the first boundary representation, a portion of the at least one inverting surface element corresponding to the inversion region, to obtain a non-inverting portion of the first boundary representation.

3. The method of embodiment 2, comprising:

discretizing one or more of the connected surface elements to form a mesh representing at least the at least one inverting connected surface element, wherein the mesh comprises vertices from which the sampling points are taken; and wherein
determining, for the respective offset point and using the distance field representation, a nearest point on the first boundary representation comprises evaluating the distance field representation at the respective offset point using a data structure configured to support searches in three-dimensional space by finding in the data structure a mesh element nearest the offset point.

4. The method of embodiment 3, wherein a mesh representation of the first boundary representation is stored in the data structure, the mesh representation comprises the mesh representing at least the at least one inverting connected surface element, and a discretization size of the mesh representation of the first boundary representation is less than the offset amount.

5. The method of embodiment 2, wherein using multi-threading to process respective ones of the connected surface elements to produce offset surface elements for the second boundary representation in accordance with the offset amount comprises processing the non-inverting portion of the first boundary representation to produce one or more non-inverting offset surface elements for the second boundary representation.

6. The method of embodiment 5, wherein processing, by the computer aided design program, the boundary representation of the second three-dimensional object for output by a physical device comprises displaying, using a graphical user interface, the one or more non-inverting offset surface elements for the second boundary representation and an indication that the inversion region is missing in the second boundary representation.

7. The method of embodiment 5, comprising adding a patch to the one or more non-inverting surface elements for the second boundary representation, wherein the patch corresponds to an approximate offset boundary representation of the inversion region that joins to the one or more non-inverting offset surface elements in a watertight manner.

8. The method of embodiment 7, wherein adding the patch comprises:

determining a set of points on the boundary of the inversion region;
determining a set of surface normal vectors, each of the surface normal vectors being determined at a respective point of the set of points;
generating a mesh patch for the inversion region using the set of points and the set of surface normal vectors; and
generating an offset boundary representation corresponding to the mesh patch.

9. The method of embodiment 8, wherein the offset boundary representation corresponding to the mesh patch is generated using loft surfaces or thin-plate splines.

10. The method of embodiment 1, wherein identifying portions of the connected surface elements that will not have corresponding portions in the offset surface elements by evaluating the distance field representation of the first three-dimensional object using sampling points taken from the offset surface elements comprises:

taking the sampling points from at least one of the offset surface elements using a predefined distance between the sampling points in three-dimensional space;

finding, for a respective sampling point evaluated against the distance field, any of the connected surface elements that are within a distance range from the respective sampling point, wherein the distance range depends on the offset amount and the predefined distance between the sampling points in three-dimensional space; and

removing a first portion of the offset surface elements corresponding to a first portion of the connected surface elements based on a respective sampling point having two or more of the connected surface elements found to be within the distance range.

11. The method of embodiment 10, comprising:

finding, for each respective sampling point having two or more of the connected surface elements found to be within the distance range, one or more intersection curves between pairs of offset surface elements corresponding to pairs of the two or more of the connected surface elements found to be within the distance range;

taking, for each respective sampling point, marching steps along the found intersection curves with a marching step size to determine offset surface elements that belong to candidate edges based on having the pairs of the two or more of the connected surface elements found to be within a marching distance range, wherein the marching distance range depends on the offset amount and the marching step size;

determining candidate vertices that bound the candidate edges; and

removing a second portion of the offset surface elements corresponding to a second portion of the connected surface elements using the determined candidate edges and candidate vertices.

12. The method of embodiment 11, wherein same face candidate edges and same face candidate vertices from the candidate edges and candidate vertices are determined in a same computing thread, wherein same face candidate edges and same face candidate vertices bound a face of the second boundary representation.

13. The method of embodiment 12, comprising:
completing a set of edges that bound the face based on unconnected same face candidate vertices.

14. The method of embodiment 10, wherein processing, by the computer aided design program, the second boundary representation of the second three-dimensional object for output by a physical device comprises displaying, using a graphical user interface, the second boundary representation and an indication that a region of the first boundary representation could not be offset and is missing in the second boundary representation.

15. The method of embodiment 14, comprising displaying, using the graphical user interface, a recommended action to apply to the second boundary representation.

16. The method of embodiment 1, comprising:

replacing areas of the first three-dimensional object having a radius of curvature smaller than the offset amount with one or more circular arcs; and

wherein using multi-threading to process respective ones of the connected surface elements to produce offset surface elements for the boundary representation of the second three-dimensional object in accordance with the offset amount comprises producing one or more torus faces corresponding to the one or more circular arcs.

17. The method of embodiment 1, further comprising subtracting the second boundary representation from the first boundary representation to obtain a shelled version of the first three-dimensional object.

18. The method of embodiment 1, comprising:

discretizing one or more of the connected surface elements to form a mesh representation of the first boundary representation;

storing the mesh representation in a data structure configured to support searches in three-dimensional space; and wherein

the evaluating comprises evaluating the distance field representation at a selected point using the data structure by finding in the data structure a mesh element nearest the selected point, wherein the selected point is selected based on a respective sampling point.

19. A system comprising:

one or more processors; and
a computer-readable medium storing instructions that, when performed, cause the one or more processors to perform operations comprising:

receiving, by a computer aided design program, an offset amount for a first boundary representation of a first three-dimensional object, the first boundary representation comprising connected surface elements defining a boundary between interior and exterior portions of the first three-dimensional object;
forming, by the computer aided design program, a second boundary representation of a second three-dimensional object, the second three-dimensional object being an offset version of the first three-dimensional object, wherein the forming comprises

using multi-threading to process respective ones of the connected surface elements to produce offset surface elements for the second boundary representation of the second three-dimensional object in accordance with the offset amount, and
identifying portions of the connected surface elements that will not have corresponding portions in the offset surface elements by evaluating a distance field representation of the first three-dimensional object using sampling points taken from the connected surface elements, the offset surface elements, or both; and

processing, by the computer aided design program, the second boundary representation of the second three-dimensional object for output by a physical device.

20. A non-transitory computer-readable medium tangibly encoding a computer program operable to cause a processing system to perform operations comprising:

receiving, by a computer aided design program, an offset amount for a first boundary representation of a first three-dimensional object, the first boundary representation comprising connected surface elements defining a boundary between interior and exterior portions of the first three-dimensional object;
forming, by the computer aided design program, a second boundary representation of a second three-dimensional object, the second three-dimensional object being an offset version of the first three-dimensional object, wherein the forming comprises

using multi-threading to process respective ones of the connected surface elements to produce offset surface elements for the second boundary representation of the second three-dimensional object in accordance with the offset amount, and
identifying portions of the connected surface elements that will not have corresponding portions in the offset surface elements by evaluating a distance field representation of the first three-dimensional object using sampling points taken from the connected surface elements, the offset surface elements, or both; and

processing, by the computer aided design program, the second boundary representation of the second three-dimensional object for output by a physical device.

**Claims**

1. A method comprising:

receiving, by a computer aided design program, an offset amount for a first boundary representation of a first three-dimensional object, the first boundary representation comprising connected surface elements defining a boundary between interior and exterior portions of the first three-dimensional object;
forming, by the computer aided design program, a second boundary representation of a second three-dimensional object, the second three-dimensional object being an offset version of the first three-dimensional object, wherein the forming comprises

using multi-threading to process respective ones of the connected surface elements to produce offset surface elements for the second boundary representation of the second three-dimensional object in accordance with the offset amount, and
identifying portions of the connected surface elements that will not have corresponding portions in the offset surface elements by evaluating a distance field representation of the first three-dimensional object using sampling points taken from the connected surface elements, the offset surface elements, or both; and

processing, by the computer aided design program, the second boundary representation of the second three-dimensional object for output by a physical device.

2. The method of claim 1, wherein identifying portions of the connected surface elements that will not have corresponding portions in the offset surface elements by evaluating the distance field representation of the first three-dimensional object using sampling points taken from the connected surface elements comprises, for at least one of the connected surface elements that has been identified as an inverting surface element:

taking the sampling points from the at least one inverting surface element;
determining a respective offset point for a respective one of the sampling points and a first distance vector from the respective offset point to the respective one of the sampling points;
determining, for the respective offset point and using the distance field representation, a nearest point on the first boundary representation and a second distance vector from the respective offset point to the nearest point on the first boundary representation;
adding the respective one of the sampling points to a set of inversion points of an inversion region that will not have a corresponding portion in the offset surface elements based on a comparison of the first and second distance vectors; and
splitting, from the first boundary representation, a portion of the at least one inverting surface element corresponding to the inversion region, to obtain a non-inverting portion of the first boundary representation.

3. The method of claim 2, comprising:

discretizing one or more of the connected surface elements to form a mesh representing at least the at least one inverting connected surface element, wherein the mesh comprises vertices from which the sampling points are taken; and wherein
determining, for the respective offset point and using the distance field representation, a nearest point on the first boundary representation comprises evaluating the distance field representation at the respective offset point using a data structure configured to support searches in three-dimensional space by finding in the data structure a mesh element nearest the offset point,
optionally wherein a mesh representation of the first boundary representation is stored in the data structure, the mesh representation comprises the mesh representing at least the at least one inverting connected surface element, and a discretization size of the mesh representation of the first boundary representation is less than the offset amount.

4. The method of any one of claims 2 or 3, wherein using multi-threading to process respective ones of the connected surface elements to produce offset surface elements for the second boundary representation in accordance with the offset amount comprises processing the non-inverting portion of the first boundary representation to produce one or more non-inverting offset surface elements for the second boundary representation.

5. The method of claim 4, wherein processing, by the computer aided design program, the boundary representation of the second three-dimensional object for output by a physical device comprises displaying, using a graphical user interface, the one or more non-inverting offset surface elements for the second boundary representation and an indication that the inversion region is missing in the second boundary representation.

6. The method of claim 4, comprising adding a patch to the one or more non-inverting surface elements for the second boundary representation, wherein the patch corresponds to an approximate offset boundary representation of the inversion region that joins to the one or more non-inverting offset surface elements in a watertight manner, optionally wherein adding the patch comprises:

determining a set of points on the boundary of the inversion region;

determining a set of surface normal vectors, each of the surface normal vectors being determined at a respective point of the set of points;

generating a mesh patch for the inversion region using the set of points and the set of surface normal vectors; and

generating an offset boundary representation corresponding to the mesh patch, optionally wherein the offset boundary representation corresponding to the mesh patch is generated using loft surfaces or thin-plate splines.

7. The method of claim 1, wherein identifying portions of the connected surface elements that will not have corresponding portions in the offset surface elements by evaluating the distance field representation of the first three-dimensional object using sampling points taken from the offset surface elements comprises:

taking the sampling points from at least one of the offset surface elements using a predefined distance between the sampling points in three-dimensional space;

finding, for a respective sampling point evaluated against the distance field, any of the connected surface elements that are within a distance range from the respective sampling point, wherein the distance range depends on the offset amount and the predefined distance between the sampling points in three-dimensional space; and

removing a first portion of the offset surface elements corresponding to a first portion of the connected surface elements based on a respective sampling point having two or more of the connected surface elements found to be within the distance range.

8. The method of claim 7, comprising:

finding, for each respective sampling point having two or more of the connected surface elements found to be within the distance range, one or more intersection curves between pairs of offset surface elements corresponding to pairs of the two or more of the connected surface elements found to be within the distance range;

taking, for each respective sampling point, marching steps along the found intersection curves with a marching step size to determine offset surface elements that belong to candidate edges based on having the pairs of the two or more of the connected surface elements found to be within a marching distance range, wherein the marching distance range depends on the offset amount and the marching step size;

determining candidate vertices that bound the candidate edges; and

removing a second portion of the offset surface elements corresponding to a second portion of the connected surface elements using the determined candidate edges and candidate vertices.

9. The method of claim 8, wherein same face candidate edges and same face candidate vertices from the candidate edges and candidate vertices are determined in a same computing thread, wherein same face candidate edges and same face candidate vertices bound a face of the second boundary representation,

optionally comprising:

completing a set of edges that bound the face based on unconnected same face candidate vertices.

10. The method of any one of claims 1 to 4 or 6 to 9, wherein processing, by the computer aided design program, the second boundary representation of the second three-dimensional object for output by a physical device comprises displaying, using a graphical user interface, the second boundary representation and an indication that a region of the first boundary representation could not be offset and is missing in the second boundary representation, optionally comprising displaying, using the graphical user interface, a recommended action to apply to the second boundary representation.

11. The method of any preceding claim, comprising:

replacing areas of the first three-dimensional object having a radius of curvature smaller than the offset amount with one or more circular arcs; and

wherein using multi-threading to process respective ones of the connected surface elements to produce offset surface elements for the boundary representation of the second three-dimensional object in accordance with the offset amount comprises producing one or more torus faces corresponding to the one or more circular arcs.

12. The method of any preceding claim, further comprising subtracting the second boundary representation from the first boundary representation to obtain a shelled version of the first three-dimensional object.

13. The method of any preceding claim, comprising:

discretizing one or more of the connected surface elements to form a mesh representation of the first boundary representation;
storing the mesh representation in a data structure configured to support searches in three-dimensional space; and wherein
the evaluating comprises evaluating the distance field representation at a selected point using the data structure by finding in the data structure a mesh element nearest the selected point, wherein the selected point is selected based on a respective sampling point.

14. A system comprising:

one or more processors; and
a computer-readable medium storing instructions that, when performed, cause the one or more processors to perform operations comprising the method of any one of claims 1 to 13.

15. A non-transitory computer-readable medium tangibly encoding a computer program operable to cause a processing system to perform operations comprising the method of any one of claims 1 to 13.

FIG. 1

200a

230

235

250a

215

210

225

220

FIG. 2A

200b

260

265

250b

FIG. 2B

300

305

310

315

*FIG. 3A*

305´

300´

310´

315´

*FIG. 3B*

315

316´

316

*FIG. 3C*

306´

306

307´

307

*FIG. 3D*

309´

309

308´

308

*FIG. 3E*

311

*FIG. 3F*

FIG. 3G

FIG. 3H

FIG. 4

FIG. 5A

FIG. 5B

FIG. 5C

FIG. 5D

FIG. 5E

FIG. 6

FIG. 7A

FIG. 7B

FIG. 7C

FIG. 7D

FIG. 7E

FIG. 7F

FIG. 8A

FIG. 8B

FIG. 9

FIG. 10A

FIG. 10B

FIG. 10C

FIG. 10D

FIG. 11

Europäisches
Patentamt

European
Patent Office

Office européen
des brevets

# EUROPEAN SEARCH REPORT

Application Number

EP 24 19 9570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN Y ET AL: "Uniform offsetting of polygonal model based on Layered Depth-Normal Images", COMPUTER-AIDED DESIGN, ELSEVIER PUBLISHERS BV., BARKING, GB, vol. 43, no. 1, 1 January 2011 (2011-01-01), pages 31-46, XP027488564, ISSN: 0010-4485, DOI: 10.1016/J.CAD.2010.09.002 [retrieved on 2010-09-25] * Abstract; pages 31-44, sections 1-5 and 8, Figures 2, 5, 8, 10 and 13-16 * | 1-15 | INV. G06F30/00 G06F30/10 G06T17/10 G06T19/20 |
| A | FORSYTH M ED - HOFFMANN C ET AL: "SHELLING AND OFFSETTING BODIES", PROCEEDINGS OF THE THIRD SYMPOSIUM ON SOLID MODELING AND APPLICATIONS. SALT LAKE CITY, MAY 17 - 19, 1995; [PROCEEDINGS OF THE SYMPOSIUM ON SOLID MODELING AND APPLICATIONS], NEW YORK, ACM, US, vol. SYMP. 3, 17 May 1995 (1995-05-17), pages 373-381, XP000530136, DOI: 10.1145/218013.218088 ISBN: 978-0-89791-672-1 * Abstract; pages 376-378, section 3 * | 1-15 | TECHNICAL FIELDS SEARCHED (IPC) G06F G06T |

-/--

The present search report has been drawn up for all claims

| Place of search | Date of completion of the search | Examiner |
|---|---|---|
| Munich | 9 January 2025 | Lindner, Anja |

EPO FORM 1503 03.82 (P04C01)

Europäisches
Patentamt

European
Patent Office

Office européen
des brevets

# EUROPEAN SEARCH REPORT

Application Number

EP 24 19 9570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHENGJUN LIU ET AL: "Fast Intersection-Free Offset Surface Generation From Freeform Models With Triangular Meshes", IEEE TRANSACTIONS ON AUTOMATION SCIENCE AND ENGINEERING, IEEE SERVICE CENTER, NEW YORK, NY, US, vol. 8, no. 2, 1 April 2011 (2011-04-01), pages 347-360, XP011352666, ISSN: 1545-5955, DOI: 10.1109/TASE.2010.2066563 * Abstract, pages 349-353, sections III-V * | 1-15 | |
| | ----- | | |

TECHNICAL FIELDS
SEARCHED      (IPC)

The present search report has been drawn up for all claims

| Place of search | Date of completion of the search | Examiner |
|---|---|---|
| Munich | 9 January 2025 | Lindner, Anja |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                 
& : member of the same patent family, corresponding
   document

EPO FORM 1503 03.82 (P04C01)